# EUROPÄISCHE PATENTSCHRIFT

(11) **EP 2 379 901 B1**
(45) Veröffentlichungstag und Bekanntmachung des Hinweises auf die Patenterteilung: **16.12.2015**
(21) Anmeldenummer: 09740097.2
(22) Anmeldetag: 16.10.2009
(51) Int. Cl.: F16C 13/02

(54) **LAGERUNG FÜR EINE ROTIERBARE UND DURCH SCHWINGUNGSANREGUNG IN RICHTUNG IHRER ROTATIONSACHSE BEWEGBARE BRUSTWALZE**
BEARING ARRANGEMENT FOR A ROTATABLE BREAST ROLL WHICH CAN BE MOVED IN THE DIRECTION OF ITS ROTATIONAL AXIS BY VIBRATION EXCITATION
LOGEMENT POUR UN ROULEAU DE TÊTE ROTATIF POUVANT ÊTRE DÉPLACÉ PAR EXCITATION VIBRATOIRE EN DIRECTION DE SON AXE DE ROTATION

(30) Priorität: 16.12.2008 DE 102008054715
(43) Veröffentlichungstag der Anmeldung: 26.10.2011
(73) Patentinhaber: Voith Patent GmbH, 89522 Heidenheim (DE)
(72) Erfinder: SCHILZ, Andreas, 52076 Aachen (DE)
(86) Internationale Anmeldenummer: PCT/EP2009/063525
(87) Internationale Veröffentlichungsnummer: WO 2010/072434

(56) Entgegenhaltungen:
- EP-A2- 1 213 061
- WO-A1-02/061297
- WO-A1-2007/128877
- DE-A1- 2 102 110
- DE-A1- 19 944 652
- DE-T2- 69 007 079
- US-A- 2 634 658
- US-A- 2 955 001
- US-A- 4 159 152
- US-A1- 2006 054 404
- US-B1- 6 374 950

## Beschreibung

Die Erfindung betrifft eine Lagerung für eine rotierbare und durch Schwingungsanregung in Richtung ihrer Rotationsachse bewegbare und beidseitig an einem Maschinengestell mittels jeweils einer zumindest ein Radialgleitlager umfassenden Lageranordnung gelagerte Brustwalze in einer Maschine zur Herstellung von Materialbahnen.

In Maschinen zur Herstellung von Materialbahnen, insbesondere Faserstoffbahnen in Form von Papier-, Karton- oder Tissuebahnen, werden zur Abstützung von rotierbaren Walzen, welche umlaufende Bespannungen und/oder Materialbahnen führen, Radiallager eingesetzt. Bei Brustwalzen in Maschinen zur Herstellung von Faserstoffbahnen, d.h. den in der Regel ersten siebtragenden Walzen innerhalb der Maschine, wird zur Verbesserung der Formierwirkung die Walze quer zur Längsrichtung der Maschine in eine hin- und hergehende Bewegung, insbesondere Schwingung mittels eines Schüttelwerks versetzt. Diese zusätzliche Bewegungsmöglichkeit ist jedoch bei der Ausführung und Auslegung der Lagerung der Walze mit zu berücksichtigen und kann auf unterschiedliche Art und Weise gewährleistet werden. Im einfachsten Fall werden dazu mechanische Lösungen mit Abstützung oder Aufhängung der Lagerzapfen der Walze an Blattfedereinheiten gewählt. Allerdings können die wechselnden Rückstellkräfte der ausgelenkten Federn Funktionselemente in der Lagerumgebung, insbesondere des Stoffauflaufs sowie der Siebpartie ebenfalls zu Schwingungen anregen, wodurch der Formiervorgang gestört und die Eigenschaften der Materialbahn negativ beeinflusst werden. Ein weiterer Nachteil besteht darin, dass neben der eigentlich zu schüttelnden Walze auch die diesen zugeordneten Lageranordnungen, insbesondere die Lagergehäuse sowie die die Lager stützenden Elemente, beispielsweise Maschinengestellteile oder Traversen mitgeschüttelt werden, so dass sich hier eine sehr große schwingende Masse ergibt, die eine hohe Antriebsleistung erfordert. Das erforderliche Mitschütteln dieser Bauteile bewirkt ferner, dass sich keine harmonische Schüttelbewegung einstellt, da auch asymmetrisch angeordnete Bauteile mit geschüttelt werden, insbesondere bei Schüttelfrequenzen über 450 Hübe/Minute. Daher werden bei bekannten Ausführungen spezielle Zylinderrollenlager eingesetzt. Von diesen wird die axiale Verschiebung über die Zylinderrollen aufgenommen, indem der fest auf dem rotierenden Walzenzapfen sitzende zylindrische Innenring auf den Zylinderrollen abrollt und gleichzeitig axial gleitet. Die Zylinderrollen sind im feststehenden Außenring des Lagers axial geführt. Da der Lageraußenring inklusive Zylinderrollen, das Lagergehäuse und der Lagersupport jedoch axial nicht bewegt werden, ist die zu schüttelnde Masse gegenüber den federgestützten Brustwalzen verringert. Auch sind alle axial bewegbaren Teile symmetrisch zur Rotationsachse der Walze, die mit der Walzenmittenachse zusammenfällt, angeordnet. Allerdings können die Reibkräfte zwischen dem Innenring und den Zylinderrollen den Stoffauflauf und die Siebpartie zu Schwingungen anregen, was negative Einflüsse auf die Papierqualität hat. Die Reibkräfte steigen mit abnehmender Drehzahl der Walze an, so dass abhängig von der eigentlichen Schüttellast eine Mindestdrehzahl der Walze erforderlich ist, bevor die Schüttlung aktiviert werden kann. Diese Lösung ist durch hohe Wartungskosten und eine schlechte Verfügbarkeit der Lager charakterisiert.

Des Weiteren finden Lagerungen Verwendung, in denen hydrostatische Lagerelemente zum Einsatz gelangen. Derartige Lagerelemente weisen mindestens eine Primärgleitfläche zur Abstützung wenigstens einer sekundären Gleitfläche einer Welle, insbesondere eines Wellenzapfens und mindestens eine primäre Lagerfläche zur eigenen Lagerung auf einer sekundären Lagerfläche eines Lagers auf, wobei im Bereich der primären Gleitfläche mindestens zwei Schmiertaschen und im Bereich der primären Lagerfläche mindestens zwei Lagertaschen angeordnet sind, die während des Betriebs derart mit einem Fluid beaufschlagbar sind, das sich jeweils ein hydrostatischer Spalt zwischen den Gleitflächen und den Lagerflächen ausbilden kann. Ein derartiges Lagerelement ist aus der Druckschrift EP 0 535 137 B1 vorbekannt. Dieses hydrostatische Lagerelement entwickelt entsprechend dem Betriebsdruck des darin zur Anwendung gelangenden Fluids eine Kraft, die gegen die Walze wirkt. Nachteilig ist, dass bei diesem Lager die Spalten zwischen den Gleitflächen und den Lagerflächen gleichrangig mit Fluid versorgt werden und bei einer Mangelversorgung die Spalthöhe zwischen den Gleitflächen und zwischen den Lagerflächen reduziert werden kann. Auch kann es bei einem Ausfall der Ölumlaufschmierung zu einer Lagerblockade kommen. Ein weiterer Nachteil besteht darin, dass die Fluidkraft im Betriebszustand dahingehend wirkt, dass der Spalt vergrößert wird.

Gattungsgemäße Lageranordnungen sind unter anderem aus
US 2 955 001 A
US 4 159 152 A
EP 1 213 061 A2
DE 690 07 079 T2
US 2 634 658 A
bekannt geworden.

Der Erfindung liegt daher die Aufgabe zugrunde, eine Lageranordnung für eine schüttelbare Brustwalze der eingangs genannten Art derart weiterzuentwickeln, dass diese Nachteile vermieden werden. Die erfindungsgemäße Lösung soll eine optimale Abstützung der Radiallasten bei gleichzeitig zugelassener axialer Bewegung der Walze, d.h. entlang der Rotationsachse der Walze mit geringem konstruktiven Aufwand ermöglichen.

Die erfindungsgemäße Lösung ist durch die Merkmale des Anspruchs 1 charakterisiert. Vorteilhafte Ausgestaltungen sind in den Unteransprüchen beschrieben

Eine Lagerung für eine rotierbare und durch Schwingungsanregung in Richtung ihrer Rotationsachse bewegbare und beidseitig an einem Maschinengestell mittels jeweils einer zumindest ein Radialgleitlager umfassenden Lageranordnung gelagerte, schüttelbare Brustwalze in einer Maschine zur Herstellung von Materialbahnen, ist erfindungsgemäß dadurch gekennzeichnet, dass das Radialgleitlager einer Lageranordnung als hydrodynamisches Radialgleitlager ausgeführt ist.

Das Vorsehen eines hydrodynamischen Radialgleitlagers bietet den Vorteil, dass über dieses ausschließlich Radiallasten, bedingt durch die Zugkraft einer die Walze umschlingenden Bespannung und das Walzengewicht aufgenommen werden, wobei gleichzeitig eine freie axiale Bewegbarkeit der Walze gegenüber dem Radialgleitlager bei nur geringer Reibung aufgrund von Flüssigkeitsreibung gewährleistet wird. Dazu umfasst das hydrodynamische Radialgleitlager zumindest eine, am Maschinengestell wenigstens mittelbar ortsfest angeordnete Lagerbuchse, in welcher ein Lagerzapfen der Walze exzentrisch unter Ausbildung eines in Umfangsrichtung um den Lagerzapfen in seinem Querschnitt veränderbaren Lagerspalts angeordnet ist. Unter der Lagerbuchse wird dabei ein Element verstanden, welches die Funktion des Lagergehäuses übernimmt oder das sich direkt im Lagergehäuse abstützt. Unter einem Lagerzapfen wird das Element verstanden, das in der Lagerbuchse gelagert ist. Bei dem Lagerzapfen handelt es sich bei Walzen in der Regel um ein Wellenende. Dieses kann als Vollprofil- oder Hohlprofilbauteil vorliegen. Ferner kann es sich bei Lagerzapfen auch um ein drehfest mit der Walze gekoppeltes Element handeln, das über die Lageranordnung in der Lagerbuchse gelagert wird.

Die Funktionsweise derartiger hydrodynamischer Radialgleitlager basiert auf dem Prinzip des sogenannten hydrodynamischen Schmierkeils, der bei Befüllung des Lagerspalts mit einem entsprechenden Betriebsmedium, insbesondere Schmiermittel, mit einem sich verengenden Querschnitt durch den exzentrisch in der Lagerschale angeordneten Lagerzapfens gebildet wird. Dazu wird dem Lagerspalt Schmiermittel, insbesondere Öl, über eine oder mehrere Zufuhrkanäle zum Lagerspalt zugeführt. Die Zufuhr kann direkt, insbesondere über die Lagerbuchse oder indirekt über ein die Lagerbuchse aufnehmendes Lagergehäuse erfolgen. Die Zufuhr über die Lagerbuchse bietet aufgrund der ortsfesten Anordnung den Vorteil einer einfachen Realisierbarkeit. Diese kann dazu eine oder mehrere Schmierbohrungen, Schmiertaschen, Ring- oder Umfangsnuten umfassen. Denkbar ist theoretisch auch eine alternative Führung über den Lagerzapfen.

Die Zufuhr von Schmiermittel erfolgt in besonders vorteilhafter Weise in der unbelasteten Zone der Lageranordnung, das heißt der entgegen der Schwerkraftrichtung liegenden Zone der Lageranordnung, welche in der Regel dem Bereich oberhalb der Rotationsachse in Einbaulage entspricht. Dabei können der gesamte Bereich in Umfangsrichtung von bis zu 180° und damit die zwei oberen Quadranten zur Anordnung genutzt werden. Bei Rotation der Walze bewirkt der rotierende Lagerzapfen eine Förderung des Öls in den konvergenten Lagerspalt. In der belasteten Zone baut sich dann ein Öldruck auf, welcher geeignet ist, den Lagerzapfen von der Lagerbuchse abzuheben und diesen auf einem Schmierfilm zu tragen. Dabei werden neben dem Zustand der Festkörperreibung im Anfangszustand der Zustand der Mischreibung bis zum Erreichen der vollständigen Schwimmreibung frei von Kontakt zwischen den Oberflächen von Lagerzapfen und Lagerbuchse durchlaufen. In diesem Funktionszustand arbeitet die Lageranordnung verschleißfrei und die axial wirkenden Kräfte sind, da es sich hier um Flüssigkeitsreibung handelt, relativ gering.

Dem einzelnen hydrodynamischen Radialgleitlager ist ein Schmiermittelversorgungs- und/oder Führungssystem zugeordnet. Bei diesem handelt es sich erfindungsgemäß um ein Umlaufsystem, umfassend einen als Schmiermittelquelle fungierenden Schmiermittelspeicher, einen Kreislauf mit einem mit dem Lagerspalt verbindbaren Vorlauf und einem den Lagerspalt wenigstens mittelbar mit dem Schmiermittelspeicher verbindbaren Rücklauf sowie einer Einrichtung zur Förderung des Schmiermittels im Kreislauf, wobei der Kreislauf offen oder geschlossen ausgeführt sein kann.

Gemäß der Erfindung ist dabei jedem einzelnen hydrodynamischen Radialgleitlager ein Schmiermittelversorgungs- und/oder Führungssystem mit Mitteln zur Aufrechterhaltung des Schmiermittelumlaufs zugeordnet. Die beiden Systeme sind dann entweder autark voneinander, das heißt separat ansteuerbar und betreibbar, oder aber werden in einer besonders vorteilhaften Ausführung steuertechnisch miteinander zwangsgekoppelt. Im letztgenannten Fall erfolgt die Ansteuerung beider vorzugsweise in analoger Weise, um beidseitig der Walze gleiche Verhältnisse zu gewährleisten. Beide Möglichkeiten bieten den Vorteil, dass beidseitig der Walze die Lagerkräfte entsprechend den konkreten Anforderungen in optimaler Weise aufgenommen werden können.

In einer vorteilhaften Ausführung sind den einzelnen hydrodynamischen Radialgleitlagern die Mittel zur Aufrechterhaltung eines Schmiermittelumlaufs den Schmiermittelversorgungs- und/oder Führungssystemen der Lageranordnungen gemeinsam zugeordnet. In diesem Fall können in Funktionskonzentration eine Vielzahl von Kanälen, Leitungsverbindungen und Funktionselementen der Kreisläufe jeweils für die einzelnen hydrodynamischen Radialgleitlager parallel genutzt werden.

In einer besonders vorteilhaften Weiterentwicklung ist den einzelnen Lageranordnungen ein gemeinsames Schmiermittelversorgungs- und/oder Führungssystem zugeordnet. Der Aufwand für die Schmiermittelführung kann dadurch nochmals minimiert werden. Es sind innerhalb des Kreislaufs lediglich Mittel vorzusehen, um die einzelnen Lager in entsprechend den einzelnen Anforderungen mit Schmiermitteln zu versorgen.

Um den Schmiermittelbedarf des hydrodynamischen Lagers, welcher in Abhängigkeit von den Betriebsparametern wie Lagerlast, Drehzahl der Walze, Temperatur und Viskosität des Schmiermittels stark variieren kann, möglichst entsprechend den Anforderungen bereitzustellen, wird die Umlaufanlage mit konstantem Druck betrieben. Dies wird erfindungsgemäß über Mittel zur Druckregelung realisiert. Diese sind in der Regel im Vorlauf des Schmiermittelversorgungs- und/oder Führungssystems zum hydrodynamischen Radialgleitlager, insbesondere vor dem Lagerspalt angeordnet und können je nach Leitungsführung verschiedenartig ausgebildet sein.

In einer ersten Ausführung umfassen die Mittel zur Druckregelung eine Einrichtung zur Druckerfassung im Vorlauf zum Lagerspalt, wobei der erfasste Druckwert in einer Übertragungseinrichtung verarbeitet und in ein Stellsignal für die Ansteuerung einer im Schmiermittelversorgungs- und/oder Führungssystem angeordneten Fördereinrichtung zur Aufrechterhaltung des Umlaufs umgewandelt wird. Die Übertragungseinrichtung kann dabei in einer ersten Ausführung ein einfaches Übertragungsglied beinhalten, das einen bestimmten Druckwert in ein entsprechendes Stellsignal übersetzt oder aber eine Steuer- und/oder Regeleinrichtung, wobei diese Aufgabe von der Steuer- und/oder Regeleinrichtung des gesamten Schmiermittelversorgungs- und/oder Führungssystems übernommen werden kann.

In einer Weiterentwicklung umfassen die Mittel zur Druckregelung ein Druckbegrenzungsventil im Vorlauf. Dadurch wird gewährleistet, dass der Zulaufdruck den zulässigen Druck nicht überschreitet. Der Druckabbau erfolgt durch Leitung von Schmiermittel in den Rücklauf. In einer weiteren Ausführung umfassen die Mittel zur Druckregelung zumindest ein Druckminderventil im Vorlauf oder aber ein Druckregelventil mit Auslassöffnung.

Die Betätigung der einzelnen Druckregelventile erfolgt vorzugsweise fremdgesteuert.

Gemäß der Erfindung ist im Schmiermittelversorgungs- und/oder Führungssystem zumindest ein Überlaufbehälter zur Aufrechterhaltung eines Notbetriebs integriert. Dieser ist oberhalb des Niveaus der Lageranordnung angeordnet und in einer besonders vorteilhaften Ausführung mit einer Einrichtung zur Überwachung des Füllstandsniveaus ausgeführt, um insbesondere einen Ausfall der Schmiermittelversorgung zu erkennen. Im einfachsten Fall umfassen die Mittel eine Einrichtung zur zumindest mittelbaren Erfassung der Füllstandshöhe, insbesondere in Form eines Schwimmerschalters mit zwei Schaltpunkten, wobei der erste Schaltpunkt dem Füllstandsminimum des Überlaufbehälters zugeordnet ist, während der zweite Schaltpunkt kurz vor dem Überlaufniveau, dem Füllstandsmaximum liegt. Wird dabei nach dem Einschalten der Schmiermittelversorgung der zweite Schaltpunkt erreicht, wird sichergestellt, dass das Radialgleitlager mit Schmiermittel versorgt wird. Der Siebantrieb kann gestartet werden. Sinkt dieser jedoch unter das Überlaufniveau, wird der Siebantrieb nach einem festen Zeitintervall oder bei vorherigem Erreichen des ersten Schaltpunkts ausgeschaltet.

Um auch beim Ausfall der Schmiermittelversorgung einen Notbetrieb bis zur Abschaltung der gesamten Maschine zu gewährleisten, ist der Überlaufbehälter vorzugsweise oberhalb des Niveaus der Lageranordnung, vorzugsweise oberhalb der Rotationsachse der Walze angeordnet und damit der Schmiermittelspiegel im Überlaufbehälter durch ein erheblich höheres Niveau als im Lagerspalt charakterisiert. Bei Ausfall der Schmiermittelversorgung strömt dann das Schmiermittel aus dem Überlaufbehälter über die Verbindung des Überlaufbehälters mit dem Lagerspalt entweder direkt oder über die Kühlkanäle eines vorzugsweise vorgesehenen Kühlkreislaufs zurück an das hydrodynamische Radiallager, so dass der Lager-spalt weiterhin mit Schmiermittel befüllt wird und die Hydrodynamik erhalten bleibt.

In besonders vorteilhafter Weise umfasst das einzelne Schmiermittelversorgungs- und/oder Führungssystem zumindest noch einen integrierten Kühlkreislauf, welcher unter Ausnutzung der Leitungsverbindungen zur Versorgung des Lagerspalts einen Teilvolumenstrom im Bypass zum Lagerspalt über den Überlaufbehälter führt. Der Teilvolumenstrom wird über entsprechende Kühlkanäle, Leitungen oder Nuten am und/oder im Radialgleitlager, insbesondere der Lagerbuchse oder einem drehfest mit diesem gekoppelten Element geführt und dient zum einem der direkten Kühlung dieser Bauteile und ferner dem Austausch von Schmiermittel. Der einzelne Kühlkanal oder die einzelnen Kühlkanäle sind mit dem Vorlauf des Schmiermittelversorgungs- und/oder Führungssystems gekoppelt. Ferner ist jeweils im Endbereich dieser eine Verbindung zum Überlaufbehälter vorgesehen, um überschüssiges Medium abzuführen beziehungsweise in einem Kreislauf zum Zwecke der Kühlung führen zu können. Die Pumpeneinrichtung zur Aufrechterhaltung eines Schmiermittelumlaufs und der Querschnitt der Kühlnuten sind derart ausgelegt, dass in jedem Betriebszustand der gewünschte Schmiermittelzuführdruck für den hydrodynamischen Lagerspalt erreicht wird. Derartige Zuführdrücke liegen im Bereich vorzugsweise zwischen 1 und 3 bar.

Die Aufteilung des aus dem Vorlauf den Kühlkanälen und dem Lagerspalt zuzuführenden Schmiermittels erfolgt gemäß einer ersten Ausführung durch die entsprechende Leitungs- und Kanalführung innerhalb der Lagerbuchse, beispielhaft über eine zentrale Versorgungsleitung mit zumindest zwei Abzweigungen, die jeweils zumindest mit einem Kühlkanal und dem Lagerspalt gekoppelt sind.

In einer alternativen Ausführung ist es vorgesehen, die Trennung des Volumenstroms zum Zweck der Beaufschlagung des Überlaufbehälters außerhalb der Lagerbuchse vorzunehmen. Dies bietet den Vorteil, dass die Schmiermittelführung zum Lagerspalt erheblich vereinfacht wird.

Das hydrodynamische Radialgleitlager umfasst vorzugsweise ferner ein Gehäuse und ist beidseitig über Lagerdeckel verschlossen. Diese sind gegenüber den Wellenzapfen dichtend angeordnet, wobei die Anordnung in Form berührender oder berührungsloser Dichteinrichtungen erfolgen kann. Vorzugsweise werden zumindest in einer Richtung dichtende Dichteinrichtungen eingesetzt, wobei die in einer Richtung dichtenden Dichteinrichtungen gegen den Austritt von Schmiermittel aus dem hydrodynamischen Lager abdichten. In einer vorteilhaften Weiterentwicklung ist es vorgesehen, weitere Dichteinrichtungen oder kombinierte Dichteinrichtungen zu verwenden, die zusätzlich auch den Eintritt von Störstoffen von außerhalb in den Lagerspalt oder den mit diesen gekoppelten Räumen ermöglichen.

Die Axialkräfte werden in besonders vorteilhafter Ausführung an zumindest einem Axiallager abgestützt. Dieses ist einer der Stirnseiten der Walze zugeordnet und kann mit dem Radialgleitlager eine bauliche Einheit bilden. Das Axiallager kann verschiedenartig ausgeführt sein. Bei diesem kann es sich um ein Wälzlager oder um ein Gleitlager handeln. Dieses ist in besonders vorteilhafter Ausführung der Stirnseite der Walze zugeordnet, die zur Antriebsmaschine zum Zwecke der Schwingungsanregung weist.

Die erfindungsgemäße Lagerung ist in besonders vorteilhafter Weise für den Einsatz in sogenannten geschüttelten Brustwalzen geeignet. Dabei wird erfindungsgemäß in einem ersten Verfahrensschritt bei Einschalten der Maschine, insbesondere Aktivierung, die Ölversorgung im Schmiermittelversorgungs- und/oder Führungssystem in umlaufender Weise gewährleistet, insbesondere durch Antrieb der Fördereinrichtung. In Abhängigkeit der Drehzahl und der Eigenschaften des Schmiermittels im Schmiermittelversorgungs- und/oder Führungssystem stellt sich jeweils der entsprechende hydrodynamische Druck ein, der zu einem Abheben des Lagerzapfens von der Lagerschale führt. Bei Erreichen der Ausklinkdrehzahl, das heißt der Drehzahl, ab welcher ein Kontakt zwischen Lagerzapfen und Lagerschalen mit Sicherheit aufgehoben ist, kann dann zusätzlich gemäß der dem Fachmann bekannten Stribeckkurve eine Schwingungsanregung in horizontaler Richtung, das heißt parallel zur Rotationsachse der Walze erfolgen.

Der Volumenstrom zum Lagerspalt wird vorzugsweise vor diesem aufgeteilt, wobei ein erster Teilvolumenstrom dem Lagerspalt zugeführt wird, während der zweite Teilvolumenstrom zur Kühlung dient. Der Rücklauf aus den Kühlkanälen erfolgt über den Überlaufbehälter in den Schmiermittelspeicher. Dabei ist während des Betriebs der Walze darauf abzustellen, dass neben der eigentlichen Tragfunktion zusätzlich auch die Kühlfunktion gewährleistet ist, um einen übermäßigen Verschleiß und ein Fressen des Lagers zu vermeiden. Dementsprechend wird zumindest der Zustand des Schmiermittelversorgungs- und/oder Führungssystems hinsichtlich des Schmiermittels überwacht. Im Falle einer Unterbrechung oder eines Ausfalls der Schmiermittelversorgung wird eine mögliche Schüttlung der Walze unterbunden. Der Ausfall kann über den Überlaufbehälter, der dazu mit einer Einrichtung zur Erkennung der Füllstandshöhe ausgestattet ist, erkannt werden. In Abhängigkeit des Zustands innerhalb des Schmiermittelversorgungs- und/oder Führungssystems wird dann die Schwingungsanregung unterbunden oder zugelassen.

Die erfindungsgemäße Lösung ist nicht auf die dargestellte Ausführung beschränkt. Dies betrifft insbesondere den Aufbau des hydrodynamischen Radialgleitlagers. Dieses besteht im einfachsten Fall lediglich aus Lagerschale und Lagerzapfen, wobei diese Bauteile von entsprechenden Komponenten in Form von Gehäusen beziehungsweise Wellenenden gebildet werden können. Andere Möglichkeiten sind ebenfalls denkbar und daher nicht auszuschließen. Die Begriffe Lagerzapfen sowie Lagerschale sind daher im Wesentlichen hinsichtlich ihrer Funktion zu verstehen und nicht an eine konkrete konstruktive Ausführung gebunden.

Die erfindungsgemäße Lösung wird nachfolgend anhand von Figuren erläutert. Darin ist im Einzelnen Folgendes dargestellt:
- Figur 1a: verdeutlicht anhand einer Ansicht von vorn die Anordnung und Lagerung einer rotierbaren Walze mit Schwingungsanregung;
- Figur 1b: verdeutlicht anhand eines Axialschnitts einen Ausschnitt aus einer Vorrichtung gemäß Figur 1 a;
- Figur 2: verdeutlicht ein Detail gemäß Figur 1 b;
- Figuren 3a bis 3c: zeigen unterschiedliche Möglichkeiten der Mittel zur Druckregelung;
- Figur 4a-4d: verdeutlichen mögliche Ausführungen zur Aufteilung des Schmiermittelvolumenstroms auf den Lagerspalt und die Überlaufbehälter;
- Figur 5: zeigt eine alternative Ausführung einer Abdichtung des Radialgleitlagers, welche nicht Gegenstand der vorliegenden Erfindung ist; und
- Figuren 6a und 6b: verdeutlichen anhand eines Signalflussbilds ein Verfahren zur Steuerung, welches ebenfalls nicht Gegenstand der vorliegenden Erfindung ist.

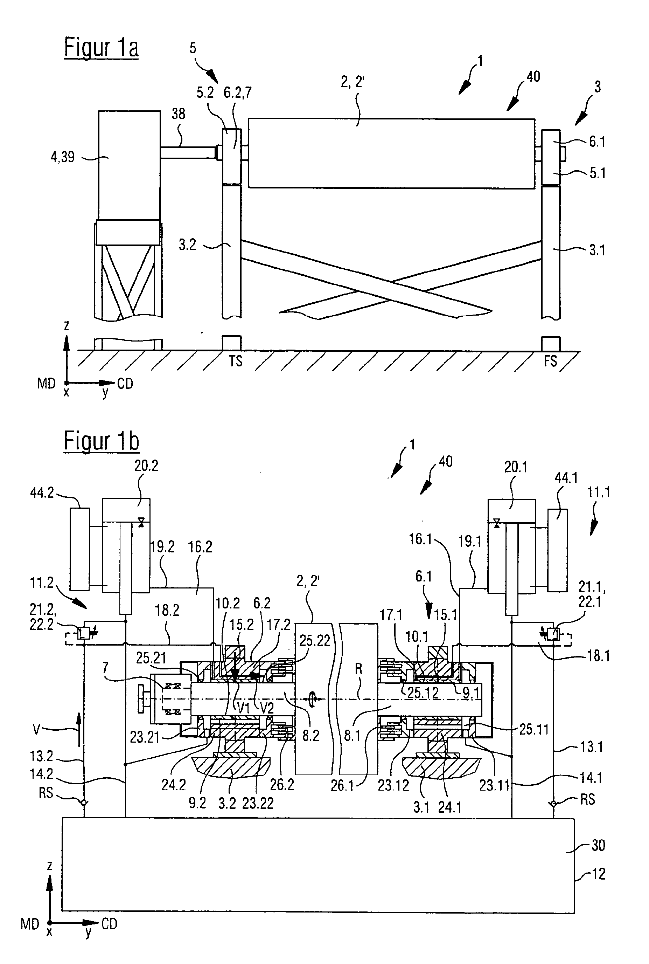

Die Figur 1 verdeutlicht in schematisiert stark vereinfachter Darstellung anhand eines Ausschnitts aus einer Maschine 1 zur Herstellung einer Materialbahn, insbesondere einer Faserstoffbahn in Form einer Papier-, Karton- oder Tissuebahn, die Lagerung und den Antrieb einer in einer nicht weiter dargestellten Formiereinrichtung 40 der Maschine 1 angeordneten Walze 2 in Form einer sogenannten Brustwalze 2' in einer Ansicht von vorn auf die Maschine 1. Zur Verdeutlichung der Lage und der einzelnen Richtungen ist ein Koordinatensystem an den Ausschnitt aus der Maschine 1 angelegt. Die X-Richtung beschreibt die Längsrichtung, welche auch als Maschinenrichtung MD bezeichnet wird und entspricht der Durchlaufrichtung der herzustellenden Materialbahn. Die Y-Richtung entspricht der Richtung senkrecht zur X-Richtung, insbesondere der Breitenrichtung CD. Die Z-Richtung beschreibt die Erstreckung in vertikaler Richtung. Dargestellt ist der Ausschnitt der Maschine 1 in der YZ-Ebene.

Die Walze 2 ist an einem Maschinengestell 3 gelagert, welches jeweils aus in Breitenrichtung voneinander beabstandet angeordneten Gestellteilen 3.1 und 3.2 besteht, einem an der Führerseite FS angeordneten und sich in Längsrichtung der Maschine 1 erstreckenden Gestellteil 3.1 und einem an der Triebseite TS angeordneten und sich in Längsrichtung der Maschine 1 erstreckenden Gestellteil 3.2. Die Triebseite TS entspricht der Seite, an welcher die Antriebseinheiten der einzelnen Funktionselemente der Maschine 1 angeordnet sind. An der Führerseite FS sind die einzelnen Funktionselemente durch das Bedienpersonal zugängig. Der Walze 2 kann beispielhaft eine Antriebsmaschine 4 zur rotatorischen Bewegung zugeordnet, ferner eine an sich bekannte Schüttelvorrichtung 39 zur Einleitung von Schwingungen parallel zur Rotationsachse R, insbesondere in Richtung der Rotationsachse R, die eine Bewegung der Walze 2 in dieser Richtung bedingen. Die Kopplung mit der Walze 2 erfolgt über Übertragungsmittel 38, insbesondere eine Schüttelstange. Die Walze 2 ist dazu an der Triebseite TS und der Führungsseite FS jeweils über eine Lageranordnung 5.2 beziehungsweise 5.1 in den auf diesen Seiten angeordneten Gestellteilen 3.2 und 3.1 gelagert. Die Lageranordnungen 5.1 und 5.2 sind beidseitig an den stirnseitigen Endbereichen der Walze 2 angeordnet. Ist die Walze 2 als sogenannte geschüttelte Brustwalze 2' ausgebildet, müssen die die Lagerung 5 bildenden Lageranordnungen 5.1 und 5.2 derart ausgeführt sein, dass diese geeignet sind, die durch die Führung umlaufender Bespannungen und/oder der Faserstoffbahn sowie des Walzengewichts bedingten Radiallasten abzustützen und eine axiale Bewegung der Walze 2 in Richtung der Rotationsachse R zuzulassen. Erfindungsgemäß umfassen die einzelnen Lageranordnungen 5.1 und 5.2 jeweils zumindest ein hydrodynamisches Radialgleitlager 6.1, 6.2, welches der Aufnahme ausschließlich von Radiallasten dient, und ermöglicht gleichzeitig die freie axiale Bewegung der Walze 2 gegenüber diesem bei geringer Reibung. Die in ihrer Richtung wechselnden Schüttelkräfte werden durch zumindest eine sich an ein hydrodynamisches Radiallager 6.1 und/oder 6.2 einseitig angeschlossene Axiallagerung 7 auf die Walze 2 übertragen. Dabei sind beide Lageranordnungen 5.1 und 5.2 bezüglich des Radialgleitlagers 6.1, 6.2 vorzugsweise in analoger Weise aufgebaut, um in optimaler Weise die entsprechenden Bewegungen in axialer Richtung zulassen zu können. Die Zuordnung der Axiallagerung 7 erfolgt hier vorzugsweise zur Triebseite TS und damit zur Lageranordnung 5.2. Die Axiallagerung 7 ist jedoch nicht Gegenstand der vorliegenden Erfindung.

Die Figur 1b verdeutlicht in schematisiert vereinfachter Darstellung anhand eines Axialschnitts in der YZ-Ebene die Ausführung der einzelnen Lageranordnungen 5.1 und 5.2 beidseits der Walze 2, insbesondere der schüttelbaren Brustwalze 2' gemäß Figur 1a. Die Lageranordnungen 5.1, 5.2 sowie die Walze 2 sind koaxial zueinander angeordnet. Die Walze 2 ist mit ihren Lagerzapfen 8.1 und 8.2 jeweils über die Lageranordnungen 5.1 und 5.2 im Maschinengestell 3, insbesondere den Gestellteilen 3.1 und 3.2, gelagert. Das hydrodynamische Radialgleitlager 6.1 beziehungsweise 6.2 ist dadurch charakterisiert, dass der Lagerzapfen 8.1 beziehungsweise 8.2 oder ein mit einer entsprechenden Buchse versehener Zapfen exzentrisch in einer ortsfest in den Gestellteilen 3.1,3.2 angeordneten Lagerbuchse 9.1 beziehungsweise 9.2 angeordnet ist. Die Funktionsweise des hydrodynamischen Radialgleitlagers 6.1, 6.2 basiert dabei auf der Grundlage des konvergenten Lagerspalts 10.1, 10.2, in welchem sich bei Befüllung mit Betriebsmedium in Form von Schmiermittel, insbesondere Öl ein Schmierkeil ausbildet, der den Lagerzapfen 8.1, 8.2 trägt. Der Lagerspalt 10.1, 10.2 wird zwischen der Lagerbuchse 9.1 beziehungsweise 9.2 und dem darin exzentrisch angeordneten Lagerzapfen 8.1 beziehungsweise 8.2 selbst gebildet. Bei Rotation des Lagerzapfens 8.1 beziehungsweise 8.2 wird aufgrund von Schubspannungen im Schmiermittel ein entsprechender Volumenstrom in den Lagerspalt 10.1, 10.2 hinein befördert. Aufgrund dieses Volumenstroms, im Zusammenwirken mit dem sich verengenden Querschnitt im Lagerspalt 10.1, 10.2 und der daraus resultierenden hydrodynamischen Druckverteilung wird eine Kraft auf den Lagerzapfen 8.1 beziehungsweise 8.2 ausgeübt. Ist diese Kraft ausreichend groß, führt diese zu einer Trennung zwischen Lagerbuchse 9.1 beziehungsweise 9.2 und Lagerzapfen 8.1 und 8.2, das heißt, der Lagerzapfen 8.1 beziehungsweise 8.2 gleitet ohne direkten Kontakt zur Lagerbuchse 9.1 beziehungsweise 9.2 in dieser. Dazu ist das einzelne hydrodynamische Radialgleitlager 6.1 beziehungsweise 6.2 mit einem Schmiermittelversorgungs- und/oder Führungssystem 11.1 beziehungsweise 11.2 gekoppelt, wobei beide Schmiermittelversorgungs- und/oder Führungssysteme 11.1, 11.2 vorzugsweise einen gemeinsamen Schmiermittelspeicher 30 nutzen. Jedes Schmiermittelversorgungs- und/oder Führungssystem 11.1, 11.2 kann durch eigene Mittel zur Aufrechterhaltung eines Schmiermittelumlaufs, insbesondere Förder- beziehungsweise Pumpeneineinrichtungen, Filtereinrichtungen, Kühleinrichtungen charakterisiert sein. Vorzugsweise können die einzelnen Schmiermittelversorgungs- und/oder Führungssysteme 11.1, 11.2 auch mit einem hier nicht detailliert dargestellten weiteren Kreislauf, insbesondere Umlaufsystem 12 gekoppelt sein, wobei in diesem Umlaufsystem 12 das Schmiermittel mittels einer Umlauffördereinrichtung, insbesondere Pumpe P über Kühleinrichtungen, insbesondere Wärmetauscher und weitere Funktionskomponenten, wie Filter geführt wird. Der Schmiermittelspeicher 30 ist dann in Form eines offenen oder geschlossenen Tanks in das Umlaufsystem 12 integriert. Vorzugsweise sind beide Schmiermittelversorgungs- und/oder Führungssysteme 11.1, 11.2 zur Gewährleistung gleicher Betriebsbedingungen gleich ausgeführt und ausgelegt und hinsichtlich ihrer Betätigung zwangsgekoppelt.

Der Umlauf in den einzelnen Schmiermittelversorgungs- und/oder Führungssystemen 11.1, 11.2 kann durch eine im Umlaufssystem 12 vorgesehene gemeinsame Pumpeneinrichtung P oder aber eine jedem Schmiermittelversorgungs- und/oder Führungssystemen 11.1, 11.2 eigens zugeordnete Pumpeneinrichtung erfolgen. Im ersten Fall ist die Förderleistung entsprechend des Bedarfs beider Schmiermittelversorgungs- und/oder Führungssystemen 11.1, 11.2 auszulegen und es genügt eine Pumpeneinrichtung.

Die einzelnen Schmiermittelversorgungs- und/oder Führungssysteme 11.1, 11.2 umfassen zur Zufuhr von Schmiermittel zum Lagerspalt 10.1, 10.2 jeweils einen Vorlauf 13.1, 13.2 in Form von Schmiermedien führenden Leitungen oder Kanälen. Der einzelne Rücklauf in Form von Schmiermedien führenden Leitungen oder Kanälen zwischen Lagerspalt 10.1, 10.2 und Umlaufssystem 12 ist mit 14.1, 14.2 bezeichnet. Die Kopplung kann wie im dargestellten Fall direkt, vorzugsweise durch einen entsprechenden Anschluss 15.1, 15.2 des Vorlaufs 13.1, 13.2 an den Lagerspalt 10.1, 10.2, insbesondere die Lagerbuchse 9.1, 9.2 erfolgen oder aber indirekt über weitere Funktionseinheiten. Um das Radialgleitlager 6.1, 6.2 zu kühlen ist der jeweilige Kühlkreislauf 16.1, 16.2 vorzugsweise in das Schmiermittelversorgungs- und/oder Führungssystem 11.1, 11.2 mit integriert.

Zur Aufrechterhaltung eines Notbetriebs und Aufnahme von überschüssigem Schmiermittel ist ein Überlaufbehälter 20.1, 20.2 vorgesehen. Dieser ist mit dem Rücklauf 14.1, 14.2 des Schmiermittelversorgungs- und/oder Führungssystems 11.1, 11.2 gekoppelt. Die Kopplung des Lagerspalts 10.1, 10.2 erfolgt dabei indirekt über zur Kühlung vorgesehene Kanäle mit dem Überlaufbehälter 20.1, 20.2. Am Außenumfang und/oder innerhalb der Wandung der Lagerbuchse 9.1, 9.2 sind dazu miteinander gekoppelte Kühlkanäle 17.1, 17.2 vorgesehen. Der Vorlauf 18.1, 18.2 für den Kühlkreislauf 16.1, 16.2 wird vom Vorlauf 13.1, 13.2 zur Versorgung des Lagerspalts 10.1, 10.2 mit Schmiermittel gebildet. Der Rücklauf 19.1, 19.2 des Kühlkreislaufs 16.1, 16.2 ist mit dem Rücklauf 14.1, 14.2 des einzelnen Schmiermittelversorgungs- und/oder Führungssystems 11.1, 11.2 gekoppelt beziehungsweise wird von diesem teilweise gebildet. Das im Kühlkreislauf 16.1, 16.2 geführte Schmiermittel wird somit in einem Bypass zum Lagerspalt 10.1, 10.2 im Schmiermittelversorgungs- und/oder Führungssystem 11.1, 11.2 geführt. Zur Überwachung des Füllungsgrads sind Mittel 44.1, 44.2 zur Niveauüberwachung vorgesehen. Der einzelne Überlaufbehälter 10.1, 10.2 ist oberhalb des Lagerspalts 10.1, 10.2, vorzugsweise in vertikaler Richtung oberhalb der Rotationsachse R, ganz besonders bevorzugt oberhalb der gesamten Lageranordnung 6.1, 6.2 angeordnet. Dadurch kann bei Ausfall der Schmiermittelzufuhr das Schmiermittel aus dem Überlaufbehälter 20.1, 20.2 zurück zur Lageranordnung 5.1, 5.2, insbesondere über den Rücklauf 19.1, 19.2 zum Kühlkanal 17.1, 17.2 und über diesen zum Lagerspalt 10.1, 10.2 fließen, so dass das Radialgleitlager 6.1, 6.2 in diesem Zustand befüllt bleibt und dessen Funktion zumindest temporär weiter aufrechterhalten werden kann.

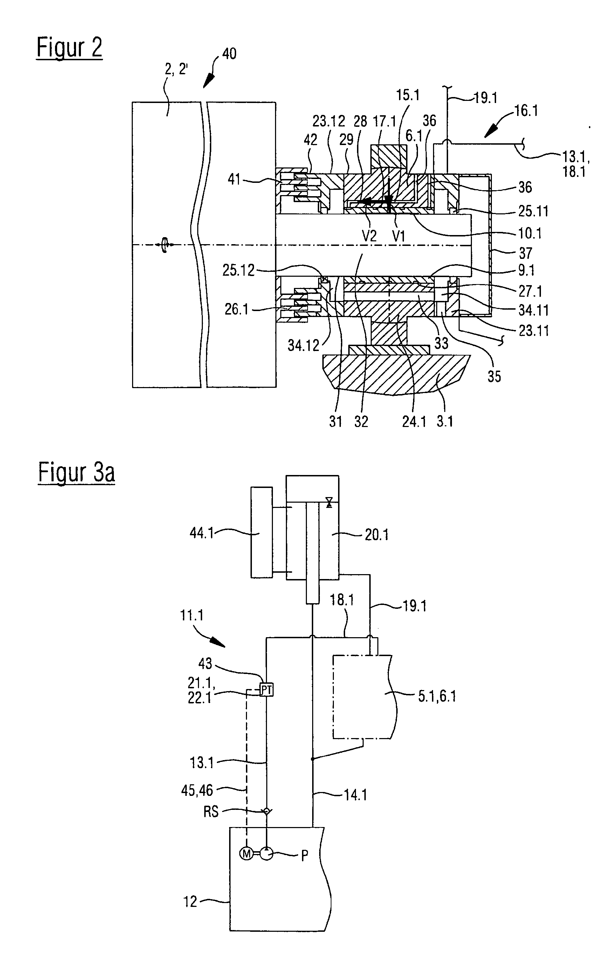

Erfindungsgemäß wird das Schmiermittelversorgungs- und/oder Führungssystem 11.1, 11.2 des hydrodynamischen Radialgleitlagers 6.1 beziehungsweise 6.2 als Umlaufssystem betrieben. Da der Schmiermittelbedarf des hydrodynamischen Radialgleitlagers 6.1, 6.2 jedoch in Abhängigkeit von den Betriebsparametern der Walze 2, wie Lagerlast, Drehzahl, Temperatur und Viskosität des Schmiermittels stark variiert, wird die Umlaufschmierung nicht mit einer Mengenregelung, sondern erfindungsgemäß mit einer Druckregelung betrieben. Dazu sind Mittel 21.1, 21.2 zur Druckregelung innerhalb des Schmiermittelversorgungs- und/oder Führungssystems 11.1, 11.2 vorgesehen, um den Druck vor dem hydrodynamischen Radialgleitlager 6.1, 6.2 konstant zu halten, wobei sich die Druckverteilung im Lagerspalt ändern kann. Dadurch können ein Überlaufen der Lagerung im kalten Zustand bei niedrigen Drehzahlen und Lasten der Walze 2, insbesondere Brustwalze 2' beziehungsweise die Unterversorgung des Radialgleitlager 6.1, 6.2 bei Volllast vermieden werden. Dazu sind erfindungsgemäß unterschiedliche Maßnahmen denkbar. Im einfachsten Fall wird dazu gemäß Figur 1b ein Druckregelventil mit Druckkraftregelung eingesetzt. Weitere Varianten für die Druckregelung sind beispielhaft in den Figuren 3a bis 3c wiedergegeben.

Die Figur 1b verdeutlicht dabei eine erste Ausführung der Mittel 21.1, 21.2. Diese umfassen in der in Figur 1b dargestellten Ausführung im Vorlauf 13.1, 13.2 und damit auch dem Vorlauf 18.1, 18.2 für den Kühlkreislauf 16.1, 16.2 beispielhaft ein fremdgesteuertes Druckbegrenzungsventil 22.1, 22.2, welches nicht ablaufdruckentlastet ist, wobei bei einem Druck im Vorlauf von pᵥₒᵣ < p_{zulässig} dieser immer das hydrodynamische Radialgleitlager 6.1, 6.2 beaufschlagt. Größere Drücke werden auf den Druck p_{zulässig} begrenzt.

Das Radialgleitlager 6.1, 6.2 weist ein Gehäuse 24.1, 24.2 auf, welches die Lagerbuchse 9.1, 9.2 bildet oder aber diese in Umfangsrichtung umschließt und das in axialer Richtung beidseitig bezogen auf den Verlauf der Rotationsachse R jeweils mittels eines Lagerdeckels 23.11, 23.12, 23.21, 23.22 verschlossen ist. Die Lagerdeckel sind dichtend gegenüber dem Lagerzapfen 8.1, 8.2 geführt, wobei die verwendete Dichtung als berührende oder berührungslose Dichtung ausgebildet sein kann. Das seitlich austretende Schmiermittel, insbesondere Öl, wird dann an den Lagerdeckeln 23.11 bis 23.22 aufgefangen und über den Rücklauf 14.1, 14.2 mit Gefälle vorzugsweise drucklos abgeführt. Die Abdichtung der Lagerdeckel 23.11 bis 23.22 erfolgt jeweils über Dichteinrichtungen 25.11 bis 25.22 zumindest gegenüber Schmiermittelaustritt, vorzugsweise auch gegen den Eintritt von Störstoffen. Die Lagerdeckel und deren Abdichtung mittels Dichteinrichtungen 25.11 bis 25.22 sind jedoch nicht Gegenstand der vorliegenden Erfindung.

Zur Abdichtung gegenüber Störstoffeintritt ist zwischen dem Radialgleitlager 6.1, 6.2 und der axial bewegbaren und rotierenden Walze 2, insbesondere Brustwalze 2' eine in axialer Richtung wirkende Labyrinthdichtung 26.1, 26.2 vorgesehen. Diese kann zumindest in teilintegraler Bauweise mit den jeweils auf diesen Seiten der Walze 2 angeordneten Lagerdeckeln 23.11, 23.21 ausgeführt sein oder aber als separate Baueinheit integriert werden. Die Labyrinthdichtung ist jedoch nicht Gegenstand der vorliegenden Erfindung.

Erkennbar ist in der Figur 1 b ferner das Axiallager 7, welches der auf der Triebseite angeordneten Lageranordnung 5.2 zugeordnet ist, welches jedoch nicht Gegenstand der vorliegenden Erfindung ist.

Die Figur 2 verdeutlicht in schematisiert vereinfachter Darstellung in vergrößerter Wiedergabe in einem Ausschnitt aus Figur 1 b die Lageranordnung 5.1. Erkennbar sind hier das hydrodynamische Radialgleitlager 6.1, das Lagergehäuse 24.1 mit der darin angeordneten Lagerbuchse 9.1. Am Außenumfang 27.1 der Lagerbuchse 9.1 ist eine in Umfangsrichtung um den Außenumfang der Lagerbuchse 9.1 verlaufende und einen Kühlkanal 17.1 bildende Nut angeordnet. Diese ist mit dem Vorlauf 13.1 des Schmiermittelversorgungs- und Führungssystems 11.1 und am anderen Ende mit dem den Zulauf zum Überlaufbehälter 20.1 bildenden Rücklauf 19.1 des Kühlkreislaufs 16.1 gekoppelt. Die Versorgung des Lagerspalts 10.1 und des Kühlkreislaufs 16.1 erfolgt über den Vorlauf 13.1. Dazu wird der über den Vorlauf 13.1 geführte Volumenstrom geteilt und ein erster Teilvolumenstrom V1 dem Lagerspalt 10.1 und ein zweiter Teilvolumenstrom V2 dem Kühlkanal 17.1 zugeführt. Die Teilung erfolgt hier innerhalb des Lagergehäuses 24.1. Dabei kann die Kopplung zwischen dem Vorlauf 13.1 und dem Lagespalt 10.1, 10.2 über eine oder mehrer Öffnungen, insbesondere Schmierbohrungen in der Lagerbuchse 9.1, Schmiertaschen, Ring- oder Umfangsnuten erfolgen. Im dargestellten Fall ist im Lagergehäuse 24.1 ein sich vom Außenumfang 29 durch diesen zum Anschluss 15.1 und zum Kühlkanal 17.1 erstreckender Verbindungskanal 28 vorgesehen. Dieser ist am Außenumfang 29 des Lagergehäuses 24.1 mit dem Vorlauf 13.1 beziehungsweise 18.1 gekoppelt und mündet verzweigend jeweils an den Anschluss 15.1 der Lagerbuchse 9.1 am Innenumfang des Lagergehäuses 24.1 und am Kühlkanal 17.1. Die Ankopplung des Vorlaufs 13.1 erfolgt bevorzugt über eine Schmiertasche in der unbelasteten Zone, kann jedoch auch bis zu 90 ° ± zu dieser versetzt in Umfangsrichtung betrachtet, erfolgen. Diese unbelastete Zone wird in vertikaler Richtung in der Regel durch einen Teilbereich in Umfangsrichtung beschrieben, der oberhalb der Rotationsachse R angeordnet ist und im Bereich der in vertikaler Richtung zur Rotationsachse R ausgerichteten Senkrechten liegt. Bei Rotation der Walze 2, insbesondere der Brustwalze 2' fördert der rotierende Lagerzapfen 8.1 das Schmiermittel, insbesondere Öl in den konvergenten Lagerspalt 10.1. In der belasteten Zone, d.h. unterhalb der Rotationsachse R baut sich dann der Öldruck auf, der nunmehr den Lagerzapfen von der Lagerbuchse 9.1 abhebt und trägt. In diesem Zustand liegt noch ein Mischreibungszustand vor. Oberhalb einer sogenannten Ausklinkdrehzahl n_{A}, unter welcher die Drehzahl verstanden wird, bei welcher der Lagerzapfen 8.1 frei von Kontakt mit der Lagerbuchse 9.1 ist, erfolgt dann eine vollständige Trennung zwischen den zueinander weisenden Oberflächen von Außenumfang 31 des Lagerzapfens 8.1 und dem Innenumfang 32 der Lagerbuchse 9.1 durch den tragenden Ölfilm. In diesem Zustand liegt reine Flüssigkeitsreibung beziehungsweise Schwimmreibung vor. Im Drehzahlbereich oberhalb dieser Ausklinkdrehzahl n_{A}, das heiß der Drehzahl, ab welcher die durch den hydrodynamischen Druck erzeugten Kräfte so groß sind, dass keinerlei Kontakt mehr vorliegt, kann dann die Schüttlung der Walze 2 erfolgen. Das Radialgleitlager 6.1 arbeitet verschleißfrei und die axial wirkenden Kräfte aufgrund der axialen Relativbewegung des Lagerzapfens 8.1 innerhalb der Lagerbuchse 9.1 sind aufgrund der Flüssigkeitsreibung relativ niedrig.

Der seitliche Austritt von Schmiermittel aus dem Radialgleitlager 6.1 wird durch die Lagerdeckel 23.11 und 23.12 verhindert, welche nicht Gegenstand der Erfindung sind. Zur Kopplung der seitlichen Zwischenräume 34.11, 34.12 zwischen Lagerbuchse 9.1 und Lagerdeckel 23.11, 23.12 miteinander ist zumindest ein sich durch das Lagergehäuse 24.1 oder die Lagerbuchse 9.1 erstreckender Verbindungskanal 33 vorgesehen, welcher, wie auch die Zwischenräume, nicht Gegenstand der Erfindung ist. Alternativ zu dem Verbindungskanal 33 kann man aber auch in nicht dargestellter Weise mit zwei Rücklaufanschlüssen arbeiten. Die Kopplung dieser Zwischenräume 34.11, 34.12, welche den freien Innenraum des Radialgleitlagers 6.1 bilden, mit dem Rücklauf 14.1 erfolgt über eine im Lagerdeckel 23.12 vorgesehene Verbindungsbohrung 35 zum Anschluss an den Rücklauf 14.1. Die Verbindungsbohrung erstreckt sich in radialer und/oder vertikaler Richtung durch den Lagerdeckel 23.11 im in Einbaulage unterhalb der Rotationsachse R liegenden Bereich des Lagerdeckels 23.11 mit Gefälle. An diese ist der Rücklauf 14.1 anschließbar.

Der Rücklauf 19.1 des Kühlkreislaufs 16.1 erfolgt über den Überlaufbehälter 20.1. Dazu ist der Rücklauf 19.1 über zumindest einen Verbindungskanal 36, der sich in radialer Richtung durch das Lagergehäuse 24.1 bis zum Außenumfang 29 erstreckt, mit dem Rücklauf 19.1 koppelbar.

Die Figuren 3a bis 3c verdeutlichen beispielhaft weitere Ausführungen der Mittel 21.1 zur Druckregelung für das Radialgleitlager 6.1. Die Figur 3a zeigt eine Ausführung mit einem Drucktransmitter 43, der im Vorlauf 13.1 angeordnet ist. Dieser dient der Ermittlung einer den Istwert des Druckwerts pᵥₒᵣ im Vorlauf 13.1 wenigstens mittelbar beschreibenden Größe vor dem hydrodynamischen Radialgleitlager 6.1, vorzugsweise direkt des Druckwerts pᵥₒᵣ. In Abhängigkeit des ermittelten Istwertes für den Druckwert pᵥₒᵣ wird die Drehzahl der den Umlauf im Schmiermittelversorgungs- und/oder Führungssystemen 11.1 aufrechterhaltenden Pumpeneinrichtung P entsprechend angesteuert. Dieser Drucktransmitter 43 ist dazu über zumindest ein Übertragungsglied 45, vorzugsweise in Form von Mitteln 46 zur Steuerung/Regelung der Betriebsweise der Pumpeneinrichtung gekoppelt. Die Mittel 46 umfassen dann beispielsweise eine Steuereinrichtung, die mit einer Stelleinrichtung der Pumpenrichtung P, insbesondere einem Antrieb M gekoppelt ist.

Der Rücklauf 14.1 sowie 19.1 des Kühlkreislaufs 16.1 ist mit dem Überlaufbehälter 20.1 sowie dem hydrodynamischen Lager 6.1 in analoger Weise wie in Figur 1 b gekoppelt.

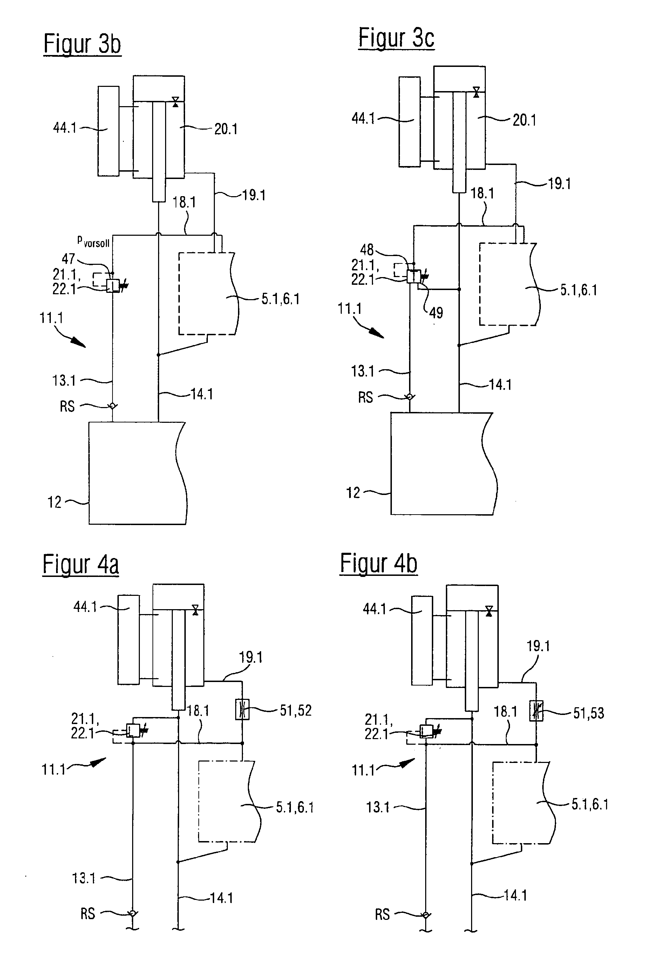

Demgegenüber verdeutlicht die Figur 3b eine Ausführung mit einem Druckregelventil 47 im Vorlauf 13.1. Dieses ist nicht ablaufdruckentlastet, das heißt frei von einer Auslassöffnung und fungiert daher als Druckminderventil. Die Druckminderventile halten den Ausgangsdruck, das heißt den Druck hinter dem Ventil unabhängig vom Eingangsdruck im Verbindungsbereich zwischen dem Druckregelventil 47 und dem Umlaufsystem 12 konstant, und zwar so lange ein Volumenstrom fließt. Nach Durchlaufen des Druckventils 47 liegt somit ein Druck pᵥₒᵣ oder der geminderte Druck pᵥₒᵣₛₒₗₗ vor. Dadurch kann der Vorlauf 13.1 direkt mit dem Lagerspalt 10.1 gekoppelt sein, wobei in diesem Vorlauf 13.1 das Druckminderventil 47 integriert ist.

Eine alternative Ausführung der Mittel 21.1 sind in der Figur 3c wiedergegeben. Diese verdeutlicht ein Druckregelventil 48 mit Auslassöffnung 49, welche mit dem Rücklauf 14.1 gekoppelt ist.

Um eine ständige Schmiermittelversorgung des hydrodynamischen Radialgleitlagers 6.1 beziehungsweise 6.2 sicherzustellen, wird der diesem, insbesondere dem

Lagerspalt 10.1, 10.2 zugeführte Volumenstrom V, wie in den Figuren 1b und 2 erläutert, in einen ersten Teilvolumenstrom V1 und einen zweiten Teilvolumenstrom V2 aufgeteilt. Der erste Teilvolumenstrom V1 fließt in den Lagerspalt 10.1, 10.2 zur Gewährleistung der hydrodynamischen Schmierung. Der zweite Teilvolumenstrom V2 fließt in einen über Lagerniveau angeordneten Überlaufbehälter 20.1, 20.2. Dieser zweite Teilvolumenstrom V2 dient im Normalbetrieb der Kühlung der Lagerbuchse 9.1, 9.2 und des Lagergehäuses 24.1, 24.2. Die Pumpeneinrichtung des gemeinsamen Umlaufsystems 12 oder die jeweils einzelnen Pumpeneinrichtungen der Schmiermittelversorgungs- und/oder Führungssysteme 11.1, 11.2 und der Querschnitt der Kühlkanäle 17.1, 17.2 werden dabei derart aufeinander abgestimmt, dass in jedem Betriebszustand der gewünschte Schmiermittelzuführdruck für den hydrodynamischen Lagerspalt 10.1, 10.2 erreicht wird. Typische Zuführdrücke liegen dabei im Bereich zwischen 1 und 3 bar. Bei Ausfall der Versorgung strömt das Schmiermittel aus dem Überlaufbehälter 20.1, 20.2 bei der Ausführung gemäß der Figuren 1b und 2 über die Kühlkanäle 17.1, 17.2 zurück in das Radialgleitlager 6.1, 6.2, so dass der Spalt 10.1, 10.2 weiterhin mit Öl befüllt bleibt und die Hydrodynamik erhalten ist. Dadurch werden Fest- oder Mischreibungszustände zwischen dem Lagerzapfen 8.1, 8.2 und der Lagerbuchse 9.1, 9.2 vermieden. Der Ölzuführdruck sinkt auf den Druck ab, der sich aufgrund der geodätischen Höhe zwischen Überlaufbehälter und dem hydrodynamischen Lager 6.1, 6.2 einstellt. In diesem Funktionszustand ist jedoch ein Dauerbetrieb aufgrund der fehlenden Kühlung im Regelfall nicht möglich. Es steht jedoch genügend Zeit zur Verfügung, um die Maschine zu überprüfen und herunterzufahren.

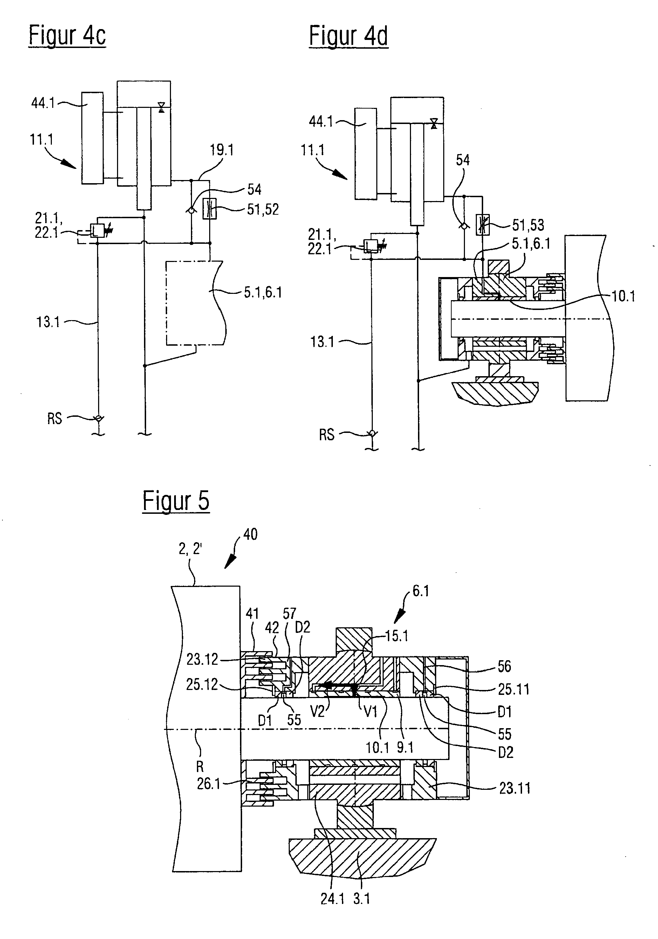

Gegenüber der Ausführung gemäß der Figuren 1b und 2 ist es auch denkbar, die Aufteilung außerhalb der Lageranordnung 5.1, 5.2 vorzunehmen. Möglichkeiten dafür sind beispielhaft für die Lageranordnung 5.1 in den Figuren 4a bis 4d wiedergegeben. Der Lagerspalt 10.1 ist mit dem Vorlauf 13.1 gekoppelt. Die Aufteilung des Volumenstroms V erfolgt vor dem Radialgleitlager 6.1. Ein erster Teilvolumenstrom V1 wird zum Lagerspalt 10.1 und der zweite Teilvolumenstrom V2 direkt zum Überlaufbehälter 20.1 geführt. Dazu ist die Rücklaufleitung 19.1 direkt mit dem Vorlauf 13.1 gekoppelt. Die Verbindung des Vorlaufs 13.1 mit dem Lagerspalt 10.1 erfolgt über einen in der Figur 4d beispielhaft dargestellten Verbindungskanal 50, der sich durch das Lagergehäuse 24.1 und die Lagerbuchse 9.1 zum Lagerspalt 10.1 erstreckt. Die Verbindung ist jedoch nicht Gegenstand der vorliegenden Erfindung. In der Verbindung zwischen dem Vorlauf 13.1 und dem Überlaufbehälter 20.1 sind dann entsprechende Mittel 51 zur Erzielung des erforderlichen Druckverlusts vorgesehen. Diese Mittel 51 umfassen in Figur 4a zumindest eine feste Drossel 52. Demgegenüber verdeutlicht die Figur 4b eine Ausführung mit einstellbarer Drossel 53. In Figur 4c ist eine Ausführung gemäß Figur 4a mit zusätzlichem Rückschlagventil 54 im Bypass zu den Mitteln 51 zwischen Überlaufbehälter 20.1 und Vorlauf 13.1 dargestellt. Die Figur 4d verdeutlicht eine Ausführung einer Kombination gemäß der Ausführung Figur 4b mit zusätzlichem Rückschlagventil 54 im Bypass.

Die Figur 5 verdeutlicht beispielhaft eine weitere Ausführung der Dichteinrichtungen 25.11 und 25.12 in einer Weiterentwicklung der Ausführung gemäß Figur 1 b und 2, welche jedoch nicht Gegenstand der vorliegenden Erfindung ist. Diese sind als kombinierte Abdichteinrichtung mit mindestens einem Dichtring D2 gegen Ölaustritt und mindestens einem Dichtring D1 gegen Störstoffeintritt mit dazwischen liegender Fettkammer 55 ausgeführt, deren Versorgung über sich durch die Lagerdeckel 23.11 und 23.22 erstreckende Verbindungskanäle 56, 57 erfolgt.

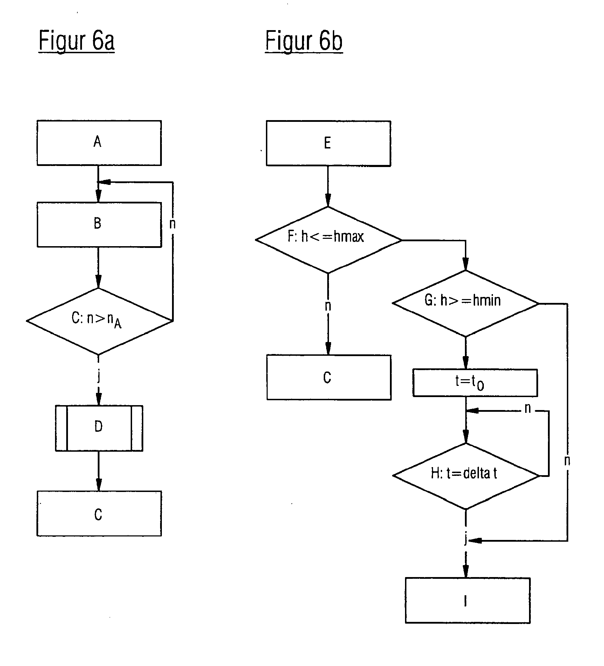

Die Figuren 6a und 6b verdeutlichen beispielhaft anhand von Signalflussbildern die Steuerung der Betriebsweise einer Walze 2, insbesondere Brustwalze 2' mit einer erfindungsgemäßen Lagerausführung mit Schmiermittelumlauf.

Figur 6a verdeutlicht den Betrieb der Walze 2 in Abhängigkeit der Drehzahl der Walze 2 und der dadurch im Zusammenhang mit den Eigenschaften des Schmiermittels bedingten Eigenschaften der Lageranordnungen 5.1 und 5.2. Das dazugehörige Verfahren ist jedoch nicht Gegenstand der vorliegenden Erfindung. Dabei werden in einem Verfahrensschritt A die Walze 2, 2' rotatorisch angetrieben und zunächst das einzelne Schmiermittelversorgungs- und/oder Führungssystem 11.1, 11.2 aktiviert. Ist der Überlaufbehälter gefüllt, darf der Siebantrieb, das heißt der rotatorische Antrieb der Walze 2 gestartet werden. Im Verfahrensschritt B werden die Drehzahl der Walze 2 oder eine diese zumindest mittelbar beschreibende Größe sowie die Eigenschaften des Schmiermittels, wie Temperatur, Viskosität, ermittelt und überwacht. Bei Erreichen der in Abhängigkeit dieser Eigenschaften des Schmiermittels erforderlichen Ausklinkdrehzahl n_{A} kann das Schüttelwerk aktiviert werden und Schwingungen in Richtung der Rotationsachse R zusätzlich zur rotatorischen Bewegung in die Walze 2, 2' in C eingetragen. Um die Sicherheit der Funktionsweise zu gewährleisten, ist es erforderlich, zusätzlich den Füllzustand der Schmiermittelversorgungs- und/oder Führungssysteme 11.1, 11.2 in D zu prüfen. Dieser Verfahrensschritt wird dem Verfahrensschritt C vorgeschaltet und ist in Figur 6b beispielhaft erläutert.

Im Verfahrensschritt E wird die Füllstandshöhe h des Überlaufbehälters 20.1, 20.2 mittels der Mittel 44 zur Niveaubestimmung ermittelt. Ist diese im Vergleich gemäß F größer als hmax, kann der Siebantrieb in C aktiviert werden. Ist diese kleiner, erfolgt entweder eine zeitabhänge Abschaltung in I nach Ablauf einer Zeitdauer deltat gemäß H oder aber eine sofortige Abschaltung I bei Unterschreitung einer minimalen Füllstandshöhe hmin.

### Bezugszeichenliste

- 1: Maschine zur Herstellung von Materialbahnen
- 2: Walze
- 2': Brustwalze
- 3: Maschinengestell
- 3.1, 3.2: Gestellteil
- 4: Antriebsmaschine
- 5: Lagerung
- 5.1, 5.2: Lageranordnung
- 6.1, 6.2: Hydrodynamisches Radiallager
- 7: Axiallagerung
- 8.1, 8.2: Lagerzapfen
- 9.1, 9.2: Lagerbuchse
- 10.1, 10.2: Lagerspalt
- 11.1, 11.2: Schmiermittelversorgungs- und/oder Führungssystem
- 12.1, 12.2: Umlaufsystem
- 13.1, 13.2: Vorlauf
- 14.1, 14.2: Rücklauf
- 15.1, 15.2: Anschluss
- 16.1, 16.2: Kühlkreislauf
- 17.1, 17.2: Kühlkanal
- 18.1, 18.2: Rücklauf Kühlkreislauf
- 19.1, 19.2: Rücklauf Kühlkreislauf
- 20.1, 20.2: Überlaufbehälter
- 21.1, 21.2: Mittel zur Druckregelung
- 22.2, 22.2: Druckbegrenzungsventil
- 23.11, 23.12: Lagerdeckel
- 23.21, 23.22: Lagerdeckel
- 24.1, 24.2: Lagergehäuse
- 25.11, 25.12: Dichteinrichtung
- 25.21, 25.22: Dichteinrichtung
- 26.1, 26.2: Labyrinthdichtung
- 27.1: Außenumfang
- 28: Verbindungskanal
- 29: Außenumfang
- 30: Schmiermittelspeicher
- 31: Außenumfang des Lagerzapfens
- 32: Innenumfang der Lagerbuchse
- 33: Verbindungskanal
- 34.11, 34.12: Zwischenraum
- 35: Verbindungskanal
- 36: Verbindungskanal
- 37: Gehäuse
- 38: Übertragungsmittel
- 39: Schüttelvorrichtung
- 40: Formiereinrichtung
- 41: Labyrinthring
- 42: Labyrinthring
- 43: Drucktransmitter
- 44: Mittel zur Niveauüberwachung
- 45: Übertragungsglied
- 46: Mittel zur Steuerung und Regelung der Betriebsweise der Pumpeinrichtung
- 47: Druckregelventil
- 48: Druckregelventil
- 49: Auslassöffnung
- 50: Verbindungskanal
- 51: Mittel zur Erzeugung eines Druckverlusts
- 52: Drossel
- 53: Verstellbare Drossel
- 54: Rückschlagventil
- 55: Schmiermitteltasche
- 56: Verbindungskanal
- 57: Verbindungskanal
- A-I: Verfahrensschritte
- D1: Dichtung
- D2: Dichtung
- deltat: Zeitdauer
- FS: Führerseite
- hmax: Maximale Füllstandshöhe
- hmin: Minimale Füllstandshöhe
- M: Antrieb
- n_{A}: Ausklinkdrehzahl
- P: Pumpeneinrichtung
- Pᵥₒᵣ, pᵥₒᵣₛₒₗₗ: Druck im Vorlauf
- R: Rotationsachse
- RS: Rückschlagventil
- TS: Triebseite
- V1: Teilvolumenstrom
- V2: Teilvolumenstrom
- X: Koordinate
- Y: Koordinate
- Z: Koordinate

## Patentansprüche

1. Lagerung (5) für eine rotierbare und durch Schwingungsanregung in Richtung ihrer Rotationsachse (R) bewegbare und beidseitig an einem Maschinengestell (3) mittels jeweils einer zumindest ein Radialgleitlager umfassenden Lageranordnung (5.1, 5.2) gelagerte Brustwalze (2', 2) in einer Maschine (40) zur Herstellung von Materialbahnen,
**dadurch gekennzeichnet,**
- **dass** das Radialgleitlager einer Lageranordnung (5.1, 5.2) als hydrodynamisches Radialgleitlager (6.1, 6.2) ausgeführt ist,
- **dass** dem einzelnen hydrodynamischen Radialgleitlager (6.1, 6.2) ein Schmiermittelversorgungs- und/oder Führungssystem (11.1, 11.2) zugeordnet ist, umfassend ein Schmiermittelspeicher (30), einen den Schmiermittelspeicher (30) mit dem Lagerspalt (10.1, 10.2) verbindbaren Vorlauf (13.1, 13.2) und einen Rücklauf (14.1, 14.2) und zumindest eine Fördereinrichtung (P) umfassenden Mitteln zur Aufrechterhaltung eines Umlaufs von Schmiermittel zwischen Vorlauf (13.1, 13.2) und Rücklauf (14.1, 14.2) und
- **dass** zwischen dem einzelnen hydrodynamischen Radialgleitlager (6.1, 6.2) und dem Rücklauf (14.1, 14.2) des zugehörigen Schmiermittelversorgungs- und/oder Führungssystems (11.1, 11.2) oberhalb des Niveaus des hydrodynamischen Radialgleitlagers (6.1, 6.2) ein Überlaufbehälter (20.1, 20.2) angeordnet ist.

2. Lagerung (5) nach Anspruch 1,
**dadurch gekennzeichnet,**
**dass** das einzelne hydrodynamische Radialgleitlager (6.1, 6.2) zumindest eine am Maschinengestell (3) ortsfest angeordnete Lagerbuchse (9.1, 9.2) umfasst, in welcher ein Lagerzapfen (8.1, 8.2) der Walze (2, 2') exzentrisch unter Ausbildung eines in Umfangsrichtung um den Lagerzapfen (8.1, 8.2) in seinem Querschnitt veränderbaren Lagerspalts (10.1, 10.2) angeordnet ist.

3. Lagerung (5) nach Anspruch 1 oder 2,
**dadurch gekennzeichnet,**
**dass** die Mittel zur Aufrechterhaltung eines Umlaufs von Schmiermittel zwischen Vorlauf (13.1, 13.2) und Rücklauf (14.1, 14.2) der einzelnen Schmiermittelversorgungs- und/oder Führungssysteme (11.1, 11.2) der einzelnen hydrodynamischen Radialgleitlager (6.1, 6.2) in einem beiden Schmiermittelversorgungs- und/oder Führungssystemen (11.1, 11.2) gemeinsam nutzbaren Umlaufsystem (12) angeordnet sind.

4. Lagerung (5) nach einem der vorhergehenden Ansprüche,
**dadurch gekennzeichnet,**
- **dass** die einzelnen Schmiermittelversorgungs- und/oder Führungssysteme (11.1, 11.2) einen gemeinsamen Schmiermittelspeicher (30) aufweisen und
- **dass** die Mittel zur Aufrechterhaltung eines Umlaufs von Schmiermittel zwischen Vorlauf (13.1, 13.2) und Rücklauf (14.1, 14.2) der einzelnen Schmiermittelversorgungs- und/oder Führungssysteme (11.1, 11.2) der einzelnen hydrodynamischen Radialgleitlager (6.1, 6.2) jeweils in dem Vor- oder Rücklauf (13.1, 13.2, 14.1, 14.2) dieser angeordnet sind.

5. Lagerung (5) nach einem der vorhergehenden Ansprüche,
**dadurch gekennzeichnet,**
**dass** in dem einzelnen Schmiermittelversorgungs- und/oder Führungssystem (11.1, 11.2) Mittel zur Druckregelung (21.1, 21.2) in dem Vorlauf (13.1, 13.2) zu dem Lagerspalt (10.1, 10.2) angeordnet sind.

6. Lagerung (5) nach Anspruch 5,
**dadurch gekennzeichnet,**
**dass** die Mittel (21.1, 21.2) zur Druckregelung eine Einrichtung (43) zur zumindest mittelbaren Erfassung des Drucks in dem Vorlauf (13.1, 13.2) zu dem hydrodynamischen Radialgleitlager (6.1, 6.2) und ein Übertragungsglied (45), insbesondere in Form einer Steuer- und/oder Regeleinrichtung (46) zur Ansteuerung einer Stelleinrichtung einer Fördereinrichtung (P) der Mittel zur Aufrechterhaltung eines Umlaufs von Schmiermittel in Abhängigkeit des Drucks umfassen.

7. Lagerung (5) nach Anspruch 5,
**dadurch gekennzeichnet,**
**dass** die Mittel (21.1, 21.2) zur Druckregelung ein Druckbegrenzungsventil (22) in dem Vorlauf (13.1, 13.2) des einzelnen Schmiermittelversorgungs- und/oder Führungssystems (11.1, 11.2) umfassen.

8. Lagerung (1) nach Anspruch 5,
**dadurch gekennzeichnet,**
**dass** die Mittel (21.1, 21.2) zur Druckregelung ein Druckminderventil (47) in dem Vorlauf (13.1, 13.2) des einzelnen Schmiermittelversorgungs- und/oder Führungssystems (11.1, 11.2) umfassen.

9. Lagerung (1) nach Anspruch 5,
**dadurch gekennzeichnet,**
**dass** die Mittel (21.1, 21.2) zur Druckregelung ein Druckregelventil (48) in dem Vorlauf (13.1, 13.2) des einzelnen Schmiermittelversorgungs- und/oder Führungssystem (11.1, 11.2) mit einer mit dem Rücklauf (14.1, 14.2) gekoppelten Auslassöffnung (49) (ablaufdruckentlastet) umfassen.

10. Lagerung (5) nach einem der vorhergehenden Ansprüche,
**dadurch gekennzeichnet,**
**dass** der Vorlauf (13.1, 13.2) unter Aufteilung des in dem Vorlauf (13.1, 13.2) führbaren Volumenstroms (V) direkt mit dem Lagerspalt (10.1, 10.2) und dem Überlaufbehälter (20.1, 20.2) verbunden ist, wobei die Aufteilung des Volumenstroms (V) vorzugsweise in dem hydrodynamischen Radialgleitlager (6.1, 6.2) vorgesehen ist.

11. Lagerung (5) nach Anspruch 10,
**dadurch gekennzeichnet,**
**dass** das einzelne Schmiermittelversorgungs- und/oder Führungssystem (11.1, 11.2) einen Kühlkreislauf (16.1, 16.2) in dem Bypass zu dem Lagerspalt (10.1, 10.2) umfasst und der Rücklauf (19.1, 19.2) des Kühlkreislaufs (16.1, 16.2) mit dem Überlaufbehälter (20.1, 20.2) verbunden ist.

12. Lagerung (5) nach Anspruch 11,
**dadurch gekennzeichnet,**
**dass** der Kühlkreislauf (16.1, 16.2) zumindest einen oder mehrere miteinander gekoppelte Kühlkanäle (17.1, 17.2) umfasst, die in und/oder am Außenumfang der Lagerbuchse (9.1, 9.2) oder einem die Lagerbuchse (9.1, 9.2) aufnehmenden Lagergehäuse (24.1, 24.2) eingearbeitet sind, wobei ein erster Endbereich mit dem den Vorlauf (18.1, 18.2) zu dem Kühlkreislauf (16.1, 16.2) bildenden Vorlauf (13.1, 13.2) gekoppelt ist und der andere Endbereich mit dem Überlaufbehälter (20.1, 20.2) verbunden ist.

13. Lagerung (5) nach Anspruch 12,
**dadurch gekennzeichnet,**
**dass** die Aufteilung des Volumenstroms (V) außerhalb des hydrodynamischen Radialgleitlagers (6.1, 6.2) erfolgt, wobei in der Verbindung zwischen Vorlauf (13.1, 13.2) und Überlaufbehälter (20.1, 20.2) vorzugsweise Mittel (51) zur Erzeugung eines Druckverlusts angeordnet sind.

14. Lagerung (5) nach Anspruch 13,
**dadurch gekennzeichnet,**
**dass** die Mittel (51) zur Erzeugung eines Druckverlusts eine Konstantdrossel (52) oder eine verstellbare Drossel (53) umfassen und optional in dem Bypass zu diesen ein Rückschlagventil (54) vorgesehen ist.

15. Lagerung (5) nach einem der vorhergehenden Ansprüche,
**dadurch gekennzeichnet,**
**dass** dem einzelnen Überlaufbehälter (20.1, 20.2) Mittel (44.1, 44.2) zur Niveauerkennung zugeordnet sind.

## Claims

1. Mounting (5) for a rotatable breast roller (2', 2), which is movable in the direction of the rotation axis (R) thereof by vibration excitation and is mounted on both sides on a machine frame (3) by means of in each case one bearing assembly (5.1, 5.2) which has at least one radial plain bearing, in a machine (40) for manufacturing material webs,
**characterized in**
- **that** the radial plain bearing of one bearing assembly (5.1, 5.2) is implemented as a hydrodynamic radial plain bearing (6.1, 6.2);
- **that** the individual hydrodynamic radial plain bearing (6.1, 6.2) is assigned a lubricant supply and/or guide system (11.1, 11.2), comprising a lubricant reservoir (30), a flow line (13.1, 13.2), which is capable of connecting the lubricant reservoir (30) with the bearing gap (10.1, 10.2), and a return flow line (14.1, 14.2), and means for maintaining recirculation of lubricant between the flow line (13.1, 13.2) and the return flow line (14.1, 14.2), said means comprising at least one conveying installation (P); and
- **that** an overflow vessel (20.1, 20.2) is disposed between the individual hydrodynamic radial plain bearing (6.1, 6.2) and the return flow line (14.1, 14.2) of the associated lubricant supply and/or guide system (11.1, 11.2), so as to be above the level of the hydrodynamic radial plain bearing (6.1, 6.2).

2. Mounting (5) according to Claim 1,
**characterized in**
**that** the individual hydrodynamic radial plain bearing (6.1, 6.2) comprises at least one bearing sleeve (9.1, 9.2) which is disposed in at least one locationally fixed manner on the machine frame (3) and in which a bearing journal (8.1, 8.2) of the roller (2, 2'), while configuring a bearing gap (10.1, 10.2) which in its cross section in a circumferential direction about the bearing journal (8.1, 8.2) is modifiable, is disposed in an eccentric manner.

3. Mounting (5) according to Claim 1 or 2,
**characterized in**
**that** the means for maintaining recirculation of lubricant between the flow line (13.1, 13.2) and the return flow line (14.1, 14.2) of the individual lubricant supply and/or guide systems (11.1, 11.2) of the individual hydrodynamic radial plain bearings (6.1, 6.2) are disposed in a recirculation system (12) which is capable of being collectively utilized by both lubricant supply and/or guide systems (11.1, 11.2).

4. Mounting (5) according to one of the preceding claims,
**characterized in**
- **that** the individual lubricant supply and/or guide systems (11.1, 11.2) have a common lubricant reservoir (30), and
- **that** the means for maintaining recirculation of lubricant between the flow line (13.1, 13.2) and the return flow line (14.1, 14.2) of the individual lubricant supply and/or guide systems (11.1, 11.2) of the individual hydrodynamic radial plain bearings (6.1, 6.2) are in each case disposed in the flow or return flow line (13.1, 13.2, 14.1, 14.2) thereof.

5. Mounting (5) according to one of the preceding claims,
**characterized in**
**that** in the individual lubricant supply and/or guide system (11.1, 11.2) means for regulating pressure (21.1, 21.2) are disposed in the flow line (13.1, 13.2) to the bearing gap (10.1, 10.2).

6. Mounting (5) according to Claim 5,
**characterized in**
**that** the means (21.1, 21.2) for regulating pressure comprise an installation (43) for at least indirectly detecting the pressure in the flow line (13.1, 13.2) to the hydrodynamic radial plain bearing (6.1, 6.2) and a transmission element (45), in particular in the form of a control and/or regulating installation (46) for actuating an actuator of a conveying installation (P) of the means for maintaining recirculation of lubricant depending on pressure.

7. Mounting (5) according to Claim 5,
**characterized in**
**that** the means (21.1, 21.2) for regulating pressure comprise a pressure limiting valve (22) in the flow line (13.1, 13.2) of the individual lubricant supply and/or guide system (11.1, 11.2).

8. Mounting (1) according to Claim 5,
**characterized in**
**that** the means (21.1, 21.2) for regulating pressure have a pressure reducing valve (47) in the flow line (13.1, 13.2) of the individual lubricant supply and/or guide system (11.1, 11.2).

9. Mounting (1) according to Claim 5,
**characterized in**
**that** the means (21.1, 21.2) for regulating pressure comprise a pressure regulating valve (48) in the flow line (13.1, 13.2) of the individual lubricant supply and/or guide system (11.1, 11.2), having an outlet opening (49) (relieving the outflow pressure), which is linked to the return flow line (14.1, 14.2).

10. Mounting (5) according to one of the preceding claims,
**characterized in**
**that** the flow line (13.1, 13.2) while subdividing the volume flow (V) which is guidable in the flow line (13.1, 13.2) is directly connected to the bearing gap (10.1, 10.2) and to the overflow vessel (20.1, 20.2), wherein subdividing the volume flow (V) is preferably provided in the hydrodynamic radial plain bearing (6.1, 6.2).

11. Mounting (5) according to Claim 10,
**characterized in**
**that** the individual lubricant supply and/or guide system (11.1, 11.2) comprises a cooling circuit (16.1, 16.2) in the bypass to the bearing gap (10.1, 10.2), and the return flow line (19.1, 19.2) of the cooling circuit (16.1, 16.2) is connected to the overflow vessel (20.1, 20.2).

12. Mounting (5) according to Claim 11,
**characterized in**
**that** the cooling circuit (16.1, 16.2) comprises at least one or a plurality of mutually interlinked cooling ducts (17.1, 17.2) which are incorporated in and/or on the external circumference of the bearing sleeve (9.1, 9.2) or a bearing housing (24.1, 24.2) which receives the bearing sleeve (9.1, 9.2), wherein a first end region is linked to that flow line (13.1, 13.2) that forms the flow line (18.1, 18.2) to the cooling circuit (16.1, 16.2), and the other end region is connected to the overflow vessel (20.1, 20.2).

13. Mounting (5) according to Claim 12,
**characterized in**
**that** subdividing the volume flow (V) is performed outside the hydrodynamic radial plain bearing (6.1, 6.2), wherein preferably means (51) for generating a pressure loss are disposed in the connection between the flow line (13.1, 13.2) and the overflow vessel (20.1, 20.2).

14. Mounting (5) according to Claim 13,
**characterized in**
**that** the means (51) for generating a pressure loss comprise a constant throttle (52) or a readjustable throttle (53), and optionally a check valve (54) is provided in the bypass thereto.

15. Mounting (5) according to one of the preceding claims,
**characterized in**
**that** means (44.1, 44.2) for level detection are assigned to the individual overflow vessel (20.1, 20.2).

## Revendications

1. Logement (5) pour un rouleau de tête rotatif (2', 2) pouvant être déplacé par excitation vibratoire en direction de son axe de rotation (R) et supporté des deux côtés dans un bâti de machine (3) respectivement au moyen d'un agencement de palier (5.1, 5.2) comprenant au moins un palier lisse à charge radiale dans une machine (40) pour la fabrication de bandes de matière, **caractérisé en ce que**
- le palier lisse à charge radiale d'un agencement de palier (5.1, 5.2) est constitué par un palier lisse à charge radiale hydrodynamique (6.1, 6.2),
- au palier lisse à charge radiale hydrodynamique individuel (6.1, 6.2) est associé un système d'alimentation en lubrifiant et/ou de guidage (11.1, 11.2), comprenant un réservoir de lubrifiant (30), une conduite d'arrivée (13.1, 13.2) et une conduite de retour (14.1, 14.2) pouvant relier le réservoir de lubrifiant (30) à l'intervalle de palier (10.1, 10.2) et au moins un dispositif de transport (P) comprenant des moyens pour le maintien d'une circulation de lubrifiant entre la conduite d'arrivée (13.1, 13.2) et la conduite de retour (14.1, 14.2), et
- un réservoir à débordement (20.1, 20.2) est disposé au-dessus du niveau du palier lisse à charge radiale hydrodynamique (6.1, 6.2) entre le palier lisse à charge radiale hydrodynamique (6.1, 6.2) et la conduite de retour (14.1, 14.2) du système d'alimentation en lubrifiant et/ou de guidage correspondant (11.1, 11.2).

2. Logement (5) selon la revendication 1, **caractérisé en ce que** le palier lisse à charge radiale hydrodynamique individuel (6.1, 6.2) comprend au moins un coussinet (9.1, 9.2) disposé fixement sur le bâti de machine (3), dans lequel un tourillon (8.1, 8.2) du rouleau (2, 2') est disposé de façon excentrique en formant un intervalle de palier (10.1, 10.2) de section transversale variable en direction périphérique autour du tourillon (8.1, 8.2).

3. Logement (5) selon la revendication 1 ou 2, **caractérisé en ce que** les moyens pour maintenir une circulation de lubrifiant entre la conduite d'arrivée (13.1, 13.2) et la conduite de retour (14.1, 14.2) des systèmes individuels d'alimentation en lubrifiant et/ou de guidage (11.1, 11.2) des paliers lisses à charge radiale hydrodynamiques individuels (6.1, 6.2) sont disposés dans un système de circulation (12) commun aux deux systèmes d'alimentation en lubrifiant et/ou de guidage (11.1, 11.2).

4. Logement (5) selon l'une quelconque des revendications précédentes, **caractérisé en ce que**
- les systèmes d'alimentation en lubrifiant et/ou de guidage individuels (11.1, 11.2) présentent un réservoir de lubrifiant commun (30) et
- les moyens pour maintenir une circulation de lubrifiant entre la conduite d'arrivée (13.1, 13.2) et la conduite de retour (14.1, 14.2) des systèmes individuels d'alimentation en lubrifiant et/ou de guidage (11.1, 11.2) des paliers lisses à charge radiale hydrodynamiques individuels (6.1, 6.2) sont disposés respectivement dans la conduite d'arrivée et de retour (13.1, 13.2, 14.1, 14.2) de ceux-ci.

5. Logement (5) selon l'une quelconque des revendications précédentes, **caractérisé en ce que** des moyens de régulation de la pression (21.1, 21.2) sont disposés dans la conduite d'arrivée (13.1, 13.2) vers l'intervalle de palier (10.1, 10.2) dans le système d'alimentation en lubrifiant et/ou de guidage individuel (11.1, 11.2).

6. Logement (5) selon la revendication 5, **caractérisé en ce que** les moyens (21.1, 21.2) de régulation de la pression comprennent un dispositif (43) pour la détection au moins indirecte de la pression dans la conduite d'arrivée (13.1, 13.2) vers le palier lisse à charge radiale hydrodynamique individuel (6.1, 6.2) et un organe de transmission (45), en particulier sous la forme d'un dispositif de commande et/ou de régulation (46) pour la commande d'un dispositif de réglage d'un dispositif de transport (P) des moyens de maintien d'une circulation de lubrifiant en fonction de la pression.

7. Logement (5) selon la revendication 5, **caractérisé en ce que** les moyens (21.1, 21.2) de régulation de la pression comprennent une soupape de limitation de pression (22) dans la conduite d'arrivée (13.1, 13.2) du système d'alimentation en lubrifiant et/ou de guidage individuel (11.1, 11.2).

8. Logement (1) selon la revendication 5, **caractérisé en ce que** les moyens (21.1, 21.2) de régulation de la pression comprennent une soupape de diminution de pression (47) dans la conduite d'arrivée (13.1, 13.2) du système d'alimentation en lubrifiant et/ou de guidage individuel (11.1, 11.2).

9. Logement (1) selon la revendication 5, **caractérisé en ce que** les moyens (21.1, 21.2) de régulation de la pression comprennent une soupape de réglage de pression (48) dans la conduite d'arrivée (13.1, 13.2) du système d'alimentation en lubrifiant et/ou de guidage individuel (11.1, 11.2) avec une ouverture de sortie (49) couplée avec la conduite de retour (14.1,14.2) (évacuation détendue).

10. Logement (5) selon l'une quelconque des revendications précédentes, **caractérisé en ce que** la conduite d'arrivée (13.1, 13.2) est raccordée directement à l'intervalle de palier (10.1, 10.2) et au réservoir à débordement (20.1, 20.2) en partageant le courant volumique (V) pouvant circuler dans la conduite d'arrivée (13.1, 13.2), dans lequel le partage du courant volumique (V) est de préférence prévu dans le palier lisse à charge radiale hydrodynamique (6.1, 6.2).

11. Logement (5) selon la revendication 10, **caractérisé en ce que** le système d'alimentation en lubrifiant et/ou de guidage individuel (11.1, 11.2) comprend un circuit de refroidissement (16.1, 16.2) dans la dérivation vers l'intervalle de palier (10.1, 10.2) et la conduite de retour (19.1, 19.2) du circuit de refroidissement (16.1, 16.2) est raccordée au réservoir à débordement (20.1, 20.2).

12. Logement (5) selon la revendication 11, **caractérisé en ce que** le circuit de refroidissement (16.1, 16.2) comprend au moins un canal ou plusieurs canaux de refroidissement couplés l'un à l'autre (17.1, 17.2), qui est/sont usiné(s) dans et/ou sur la périphérie extérieure du coussinet (9.1, 9.2) ou un corps de palier (24.1, 24.2) contenant le coussinet (9.1, 9.2), dans lequel une première région d'extrémité est couplée à la conduite d'arrivée (13.1, 13.2) formant l'arrivée (18.1, 18.2) vers le circuit de refroidissement (16.1, 16.2) et l'autre région d'extrémité est raccordée au réservoir à débordement (20.1, 20.2).

13. Logement (5) selon la revendication 12, **caractérisé en ce que** le partage du courant volumique (V) est effectué à l'extérieur du palier lisse à charge radiale hydrodynamique (6.1, 6.2), dans lequel des moyens (51) de production d'une perte de pression sont de préférence disposés dans la liaison entre la conduite d'arrivée (13.1, 13.2) et le réservoir à débordement (20.1, 20.2).

14. Logement (5) selon la revendication 13, **caractérisé en ce que** les moyens (51) de production d'une perte de pression comprennent un étranglement constant (52) ou un étranglement réglable (53) et il est prévu en option un clapet antiretour (54) dans la dérivation vers celui-ci.

15. Logement (5) selon l'une quelconque des revendications précédentes, **caractérisé en ce que** des moyens (44.1, 44.2) pour la reconnaissance de niveau sont associés au réservoir à débordement individuel (20.1, 20.2).
